# EUROPEAN PATENT APPLICATION

(11) **EP 4 675 788 A1**
(43) Date of publication of application: **07.01.2026**
(21) Application number: 24763469.4
(22) Date of filing: 30.01.2024
(51) Int. Cl.: H01M 50/204, H01M 10/613, H01M 10/625, H01M 10/627, H01M 10/643, H01M 10/647, H01M 10/6563, H01M 50/209, H01M 50/213, H01M 50/271, H01M 50/289, H01M 50/342

(54) **POWER SUPPLY DEVICE**

(30) Priority: 28.02.2023 JP 2023030515
(71) Applicant: Panasonic Energy Co., Ltd., Osaka 570-8511 (JP)
(72) Inventor: AOKI, Tomoaki, Osaka 571-0057 (JP); NAKAMURA, Ginga, Osaka 571-0057 (JP); HEGURI, Katsuyoshi, Osaka 571-0057 (JP); BABA, Takeshi, Osaka 571-0057 (JP)
(74) Representative: Eisenführ Speiser
(86) International application number: PCT/JP2024/002847
(87) International publication number: WO 2024/180984

(57) **Abstract**

To safely discharges a jet substance from battery cells to prevent an external fire and have improved cooling performance, a power supply device includes a case 2 housing a battery block 10. The case 2 has a closed structure, with a case body 20 having two ends closed with end face plates 23. The battery block 10 includes a discharge surface 10A including first end faces 15 of a plurality of battery cells 1 aligned flush with one another and a cooling surface 10B that cools the battery block 10. The case 2 has a guide clearance 51 for the jet substance and an expansion chamber 53 inside. The guide clearance 51 is located between the case body 20 and the discharge surface 10A. The expansion chamber 53 is located inward from one of the end face plates 23 and between the end face plate 23 and the cooling surface 10B. The end face plates 23 have air holes 40 through which cooling air flows into the case 2 and the jet substance is discharged outside the case 2. The expansion chamber 53 includes a redirection area 54 to redirect the jet substance flowing in through the guide clearance 51 and a blowing duct area 55 through which the cooling air is blown to cool the cooling surface 10B.

## Description

### TECHNICAL FIELD

The present disclosure relates to a power supply device including a case housing battery cells each including a discharge valve that opens in response to an abnormality to discharge a jet substance.

### BACKGROUND ART

Power supply devices with a battery block of multiple battery cells housed in a case are used in power storage systems for factory or household use or in vehicles such as hybrid vehicles and electric vehicles. Such a power supply device incorporating a battery block of multiple battery cells housed in a case includes a discharge valve in each battery cell for safety purpose. To prevent the battery case from bursting, the discharge valve in each battery cell opens in response to an abnormality. The discharge valve opens in response to an abnormal use of the battery to discharge a jet substance with high temperature and pressure, possibly causing various thermal issues. The jet substance with high temperature discharged from the case may burst into flames. For safety purpose, such power supply devices can have a structure to prevent an external fire resulting from the jet substance from the battery cells discharged outside the case as flames. These power supply devices are also requested to have cooling performance for cooling heat-generating components that generate heat, such as battery blocks of multiple battery cells incorporated in the power supply device.

### CITATION LIST

### PATENT LITERATURE

Patent Literature 1: WO 2020/166501

### SUMMARY OF INVENTION

### TECHNICAL PROBLEM

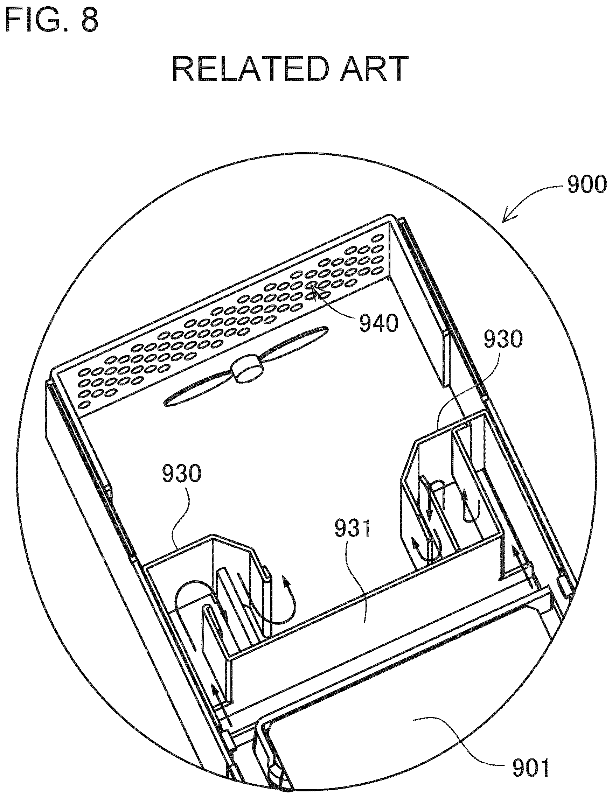

Power supply devices with an external fire prevention structure have been developed. For example, Patent Literature 1 describes a power supply device that discharges a jet substance discharged through an open discharge valve in a battery cell through labyrinth areas (bypass paths). To safely discharge the jet substance from the discharge valves, the power supply device includes heat-resistant plates with complex shapes arranged in a compartment housing the battery cells and in the labyrinth areas through which the jet substance discharged from the battery cells is discharged outside the case. In the structure that discharges the jet substance through the labyrinth areas with complex flow paths, cooling air that cools the battery cells cannot flow smoothly and decreases in volume and velocity. The structure may not achieve intended cooling performance. For example, a power supply device 900 in FIG. 8 includes labyrinth areas 930 defined to stir the jet substance discharged through the discharge valves in battery cells 901. The power supply device 900 causes the jet substance to pass through the labyrinth areas 930 to lower the energy and discharges the jet substance through air holes 940 to prevent an external fire. In this structure, the cooling air blown to the battery block is obstructed by a heat shield plate 931 that defines the labyrinth areas 930. This decreases the volume and the velocity of the cooling air and degrades the cooling performance for the battery block. Thus, preventing external fires and preventing the cooling performance decrease are contradictory to each other, and cannot be easily achieved in a balanced manner.

In response to the above issue, one or more aspects of the present disclosure are directed to a power supply device that achieves external fire prevention and improved cooling performance.

### SOLUTION TO PROBLEM

A power supply device according to one embodiment of the present disclosure includes a battery block including a plurality of battery cells, and a case housing the battery block. The case has a closed structure, with a case body having two ends closed with end face plates. The plurality of battery cells include discharge valves that open in response to an abnormality to discharge a jet substance outside. The battery cells have first end faces having openings to discharge the jet substance discharged through the open discharge valves outside. The battery block has a discharge surface for the jet substance including the first end faces of the plurality of battery cells aligned flush with one another, and a cooling surface to be cooled by cooling air blown to the cooling surface. The case has, in its inside, a guide clearance for the jet substance between the case body and the discharge surface of the battery block. The jet substance from the battery cells is discharged to the guide clearance. The case further has an expansion chamber inward from one of the end face plates and between the end face plate and the cooling surface of the battery block. The end face plate, which has the expansion chamber inside, has a plurality of air holes to allow the cooling air to flow into the case and to discharge the jet substance outside the case. The expansion chamber includes a redirection area and a blowing duct area inside. The redirection area is located along an inner surface of the case body. The blowing duct area includes a middle portion of the expansion chamber. The power supply device allows the cooling air flowing into the case through the air holes in the end face plate to be blown to the cooling surface of the battery block through the blowing duct area in the expansion chamber to cool the battery cells. The power supply device discharges the jet substance discharged through the discharge valves in the battery cells in response to an abnormality through the guide clearance between the case body and the battery block to the blowing duct area by redirecting the jet substance in the redirection area, and discharges the jet substance outside the case from the blowing duct area through the air holes in the end face plate.

### ADVANTAGEOUS EFFECTS OF INVENTION

The power supply device according to the above aspect of the present disclosure can prevent an external fire caused by the high-temperature, high-pressure jet substance discharged from the battery cells and achieve efficient cooling of the battery cells by preventing cooling performance decrease.

### BRIEF DESCRIPTION OF DRAWINGS

FIG. 1 is a schematic perspective view of a power supply device according to Embodiment 1 of the present disclosure;
FIG. 2 is a schematic cross-sectional view of the power supply device in FIG. 1;
FIG. 3 is an enlarged schematic view of a main part of the power supply device;
FIG. 4 is a schematic cross-sectional view of a power supply device in another example;
FIG. 5 is a schematic horizontal cross-sectional view of a power supply device showing an example flow of cooling air;
FIG. 6 is a schematic vertical cross-sectional view of a power supply device showing another example flow of cooling air;
FIG. 7 is a schematic cross-sectional view of a power supply device according to another embodiment; and
FIG. 8 is a schematic perspective view of an example of a known power supply device.

### DESCRIPTION OF EMBODIMENTS

One or more embodiments of the present disclosure will now be described in detail with reference to the drawings. Terms indicating specific directions or positions (e.g., upward, downward, and other similar terms) are hereafter used as appropriate to facilitate understanding of the disclosure. Although such terms specify directions or positions with reference to the drawings, the terms do not limit the technical scope of the present disclosure. The same reference numerals denote the same or similar parts or components in the drawings.

One or more embodiments described below are mere examples of the technical ideas of the present disclosure, and the present disclosure is not limited to the embodiments described below. The dimensions, materials, shapes, and relative positions of the components described below are mere examples and are not intended to limit the scope of the present disclosure, unless otherwise specified. An embodiment or an example described below may be applicable to other embodiments or examples. The sizes and the positional relationships of the components shown in the drawings may be exaggerated for clarity.

A power supply device according to one embodiment of the present disclosure includes a battery block including a plurality of battery cells, and a case housing the battery block. The case has a closed structure, with a case body having two ends closed with end face plates. The plurality of battery cells include discharge valves that open in response to an abnormality to discharge a jet substance outside. The battery cells have first end faces having openings to discharge the jet substance discharged through the open discharge valves outside. The battery block has a discharge surface for the jet substance including the first end faces of the plurality of battery cells aligned flush with one another, and a cooling surface to be cooled by cooling air blown to the cooling surface. The case has, in its inside, a guide clearance for the jet substance between the case body and the discharge surface of the battery block. The jet substance from the battery cells is discharged to the guide clearance. The case further has an expansion chamber inward from one of the end face plates and between the end face plate and the cooling surface of the battery block. The end face plate, which has the expansion chamber inside, has a plurality of air holes to allow the cooling air to flow into the case and to discharge the jet substance outside the case. The expansion chamber includes a redirection area and a blowing duct area inside. The redirection area is located along an inner surface of the case body. The blowing duct area includes a middle portion of the expansion chamber.

The power supply device allows the cooling air flowing into the case through the air holes in the end face plate to be blown to the cooling surface of the battery block through the blowing duct area in the expansion chamber to cool the battery cells. The power supply device discharges the jet substance discharged through the discharge valves in the battery cells in response to an abnormality through the guide clearance between the case body and the battery block to the blowing duct area by redirecting the jet substance in the redirection area, and discharges the jet substance outside the case from the blowing duct area through the air holes in the end face plate.

This power supply device can efficiently cool the battery block with the cooling air and prevent an external fire caused by the high-temperature, high-pressure jet substance discharged outside the case as flames. The power supply device discharges the high-temperature, high-pressure jet substance from the battery cells toward the inner surface of the case body, guides the jet substance to the redirection area through the guide clearance between the case body and the battery block, causes the jet substance with its energy lowered in the redirection area to diffuse into the blowing duct area, and discharges the jet substance flowing into the blowing duct area outside the case through the air holes in the end face plate.

In a normal use environment in which the battery cells do not discharge the jet substance, the above power supply device allows the cooling air flowing in through the air holes in the end face plate to be blown toward the cooling surface of the battery block through the blowing duct area for cooling. For an abnormality in which the discharge valve in any of the battery cells opens to discharge a jet substance, the jet substance is discharged to the guide clearance between the case body and the battery block. The jet substance discharged to the guide clearance flows along the inner surface of the case body and is guided to the redirection area located inward from the case body. The jet substance flowing into the redirection area is redirected and flows into the blowing duct area in a middle portion of the expansion chamber. The jet substance discharged through such a path is discharged into the expansion chamber through the narrow guide clearance into the expansion chamber after being discharged through the discharge valve in any of the battery cells. The jet substance flowing through the path is redirected in the redirection area to decrease in energy, adiabatically expands to decrease in temperature while flowing through the narrow guide clearance to the expansion chamber having a large volume, and is mixed with the air in the expansion chamber having a large volume and diffused to further decrease in temperature. The jet substance mixed with and dispersed into the air in the expansion chamber also decreases in flow velocity in the expansion chamber. The jet substance is discharged outside the case through the guide clearance and the redirection area. The jet substance thus flows through a longer flow path before being discharged outside the case and stays in the case for a longer time. This lowers the energy of the jet substance and reduces the temperature of the jet substance. The jet substance that has decreased in both temperature and flow velocity through the above process is dispersed into the multiple air holes to be discharged outside the case, reliably preventing a fire outside the case.

A power supply device according to another embodiment of the present disclosure may include a first hit wall at a hitting position of the jet substance flowing into the redirection area through the guide clearance. The first hit wall may allow the jet substance to hit a surface of the first hit wall to redirect the jet substance. This power supply device causes the jet substance discharged through the guide clearance to hit the hit wall to redirect the jet substance. The jet substance thus flows through a longer flow path before being discharged outside the case and stays in the case for a longer time. This lowers the energy of the jet substance and thus the temperature. This power supply device can have a simpler structure for the redirection area that redirects the jet substance flowing in through the guide clearance with the first hit wall located at the hitting position of the jet substance to decrease the energy. The power supply device causes the jet substance discharged through the guide clearance to hit the first hit wall to diffuse into the expansion chamber. Thus, the power supply device can more uniformly disperse the jet substance flowing into the expansion chamber through the guide clearance and discharge the jet substance outside the case through the multiple air holes.

A power supply device according to another embodiment of the present disclosure may include a second hit wall at a hitting position of the jet substance redirected by the first hit wall. The second hit wall may have, between the second hit wall and the inner surface of the case body, a passage clearance through which the jet substance discharged through the guide clearance passes. The power supply device may allow the jet substance discharged through the guide clearance to pass through the passage clearance and hit the first hit wall and the second hit wall to flow into the blowing duct area.

This power supply device further redirects the jet substance redirected by the first hit wall using the second hit wall to guide the jet substance to the blowing duct area. The power supply device can thus lower the kinetic energy of the jet substance more effectively in the redirection area to guide the jet substance to the blowing duct area in the expansion chamber. In addition, the second hit wall between the first hit wall and the cooling surface of the battery block can prevent thermal issues of the battery block caused by the jet substance redirected by the first hit wall and flowing toward the battery block.

In a power supply device according to another embodiment of the present disclosure, the first hit wall and the second hit wall may be heat-resistant plates. This power supply device can redirect, in the redirection area, the jet substance with the first hit wall and the second hit wall, which are heat-resistant plates, to guide the jet substance to the blowing duct area, thus lowering the energy of the jet substance. In addition, the second hit wall, which is a heat-resistant plate, can prevent thermal issues of the battery block. The heat-resistant plates are formed from, for example, a heat-resistant material such as metal or a heat-resistant resin. A lead plate or a battery holder may be used as the second hit wall. The heat-resistant material may be layered on the lead plate of the battery holder to form the second hit wall. The second hit wall may be a combination of the lead plate and the battery holder. The lead plate or the battery holder used as the second hit wall can reduce costs.

In a power supply device according to another embodiment of the present disclosure, the first hit wall may be fixed to the case body. In this power supply device, the first hit wall fixed to the case body, or particularly a surface plate, can be at the hitting position of the jet substance. In addition, the first hit wall with a lower height does not or is less likely to obstruct the cooling air blown to the cooling surface. The structure can effectively use the space inside the case near the end and the corner along the case body.

In a power supply device according to another embodiment of the present disclosure, the battery block may include a battery holder holding the plurality of battery cells in position, and the second hit wall may be integral with the battery block. This power supply device further redirects the jet substance redirected by the first hit wall using the second hit wall, which is a heat-resistant plate, to guide the jet substance to the blowing duct area, thus lowering the kinetic energy of the jet substance. The second hit wall, which is integral with the battery block, can prevent thermal issues of the battery block. The battery holder used as the second hit wall can reduce costs.

In a power supply device according to another embodiment of the present disclosure, at least one of the plurality of battery cells may have a surface partially exposed on the cooling surface of the battery block. This power supply device can effectively cool the battery cells with the cooling air. The cooling air being blown can directly cool the battery cell through the exposed surface. The cooling air can also be blown to and flow into the battery block from near the exposed surface or through clearances.

In a power supply device according to another embodiment of the present disclosure, the first hit wall may have a vertical width (H1) 1.5 to 5 times inclusive an inner dimension (d) of the guide clearance. This power supply device can increase the amount of jet substance hitting the first hit wall, and the first hit wall does not or is less likely to obstruct the cooling air blown to the cooling surface.

In a power supply device according to another embodiment of the present disclosure, the second hit wall may have a vertical width (H2) greater than a vertical width (H1) of the first hit wall. This power supply device can redirect the jet substance redirected by the first hit wall by allowing the jet substance to further hit the second hit wall.

In a power supply device according to another embodiment of the present disclosure, the first hit wall may include a bent portion protruding toward the battery block. This power supply device can increase the amount of jet substance hitting the first hit wall, improving hitting efficiency and a capturing rate for the jet substance. The power supply device can also reduce the degree by which the cooling air blown to the cooling surface is obstructed.

A power supply device according to another embodiment of the present disclosure may include a blower fan on the end face plate having the expansion chamber inside. This power supply device can forcibly blow the cooling air to a dissipation surface of the battery block with the blower fan located inward or outward from the end face plate, thus cooling the battery cells effectively. The blower fan can draw in air outside the case through the air holes and blow the air to the cooling surface of the battery block. The blower fan discharges the air in the case outside the case through the air holes, thus facilitating airflow and ventilation in the case. The blower fan causes the cooling air to flow and blows the cooling air, thus effectively cooling the battery block. The blower fan adjacent to the air holes, including a housing case for the blower fan, also functions as a flame retardant wall that prevents sparks or flames from bursting outside the case, contributing to external fire prevention. The housing case for the blower fan may have a surface with a heat-resistant material.

In a power supply device according to another embodiment of the present disclosure, the power supply device may allow the cooling air blown by the blower fan to flow into the guide clearance. This power supply device allows the cooling air to be blown and flow to the battery block through the guide clearance, thus cooling the battery block. The guide clearance can increase an area through which the cooling air flows along the battery block and also increase the amount of cooling air flowing and being blown around the battery block, thus improving the cooling performance. For example, the structure allows the cooling air to flow and be blown along the inner surface of the case body adjacent to the side surfaces and the upper and lower surfaces of the battery block, thus improving the cooling performance. In this power supply device, the guide clearance can contribute to both external fire prevention and cooling performance improvement, and allows the power supply device to be space-saving.

A power supply device 100 uses nonaqueous electrolyte secondary battery cells such as lithium-ion battery cells to be lighter and to have higher capacity. However, such a power supply device can burst due to a higher internal pressure when used abnormally. To prevent this, battery cells 1 each include a discharge valve 12 that opens when the internal pressure exceeds a set pressure. The discharge valve 12 opens in response to an abnormality to discharge a jet substance including a discharge gas, an electrolyte, and an electrode material through an opening 12a to prevent a burst. The jet substance with a particularly high temperature and a particularly high pressure tends to flow straight when discharged with momentum. The jet substance may ignite or cause a fire when discharged outside a case 2. Such an external fire is to be prevented for safety purpose. The power supply device includes a battery block 10 including the multiple battery cells 1 that generate heat. To prevent issues resulting from heat generation such as lower battery performance due to charge and discharge, the power supply device is to have cooling performance for cooling the heat-generating components.

### [EMBODIMENT 1]

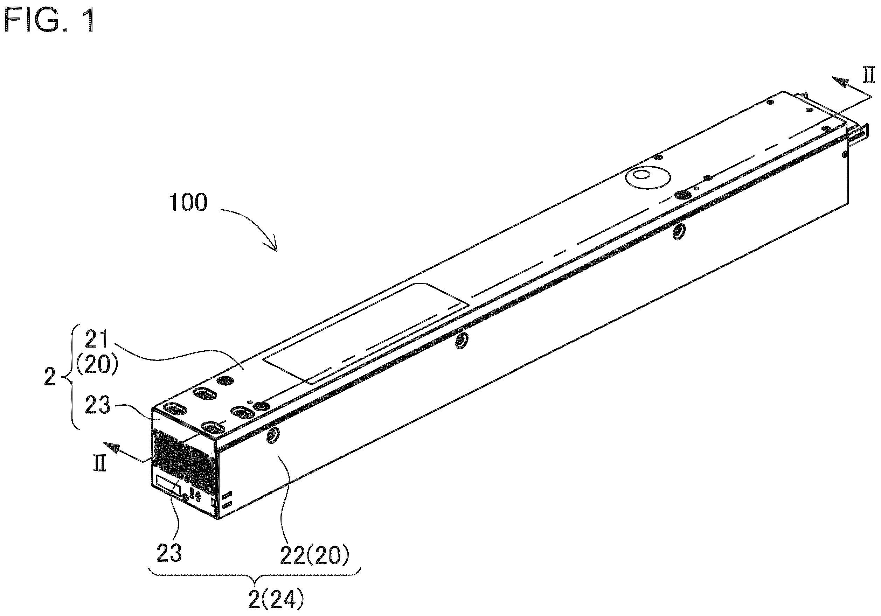

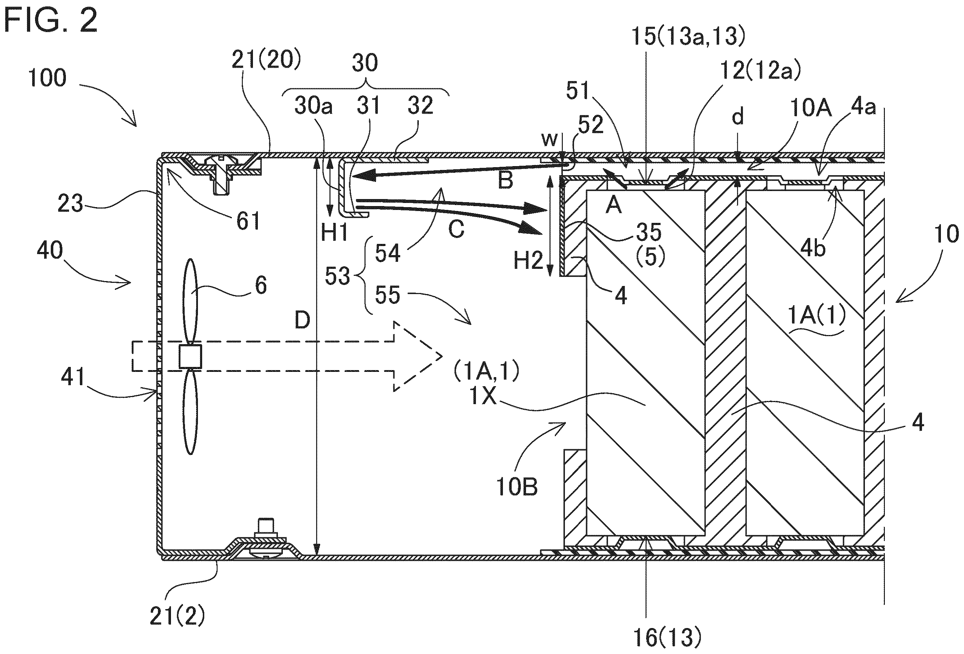

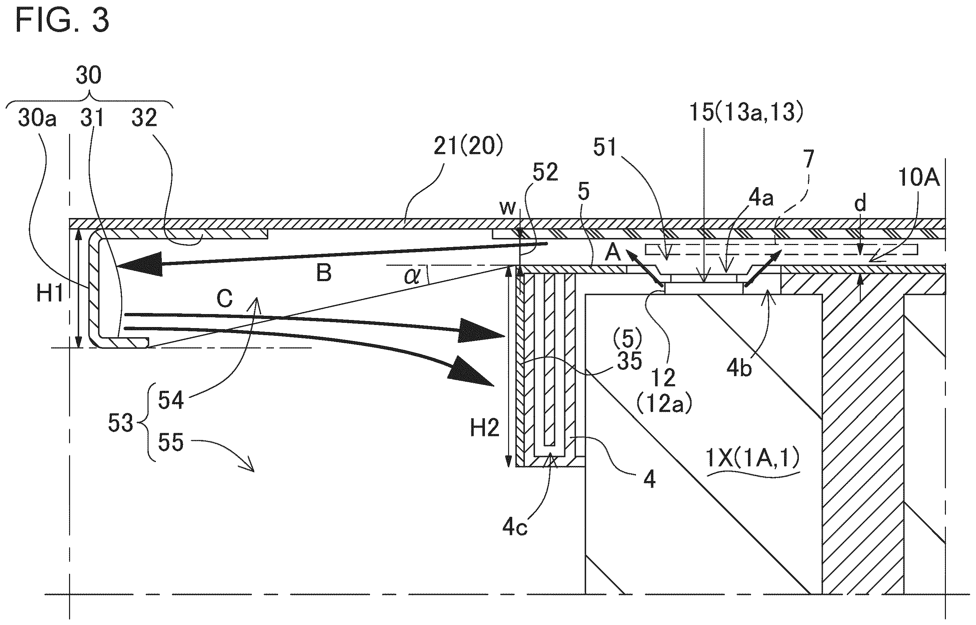

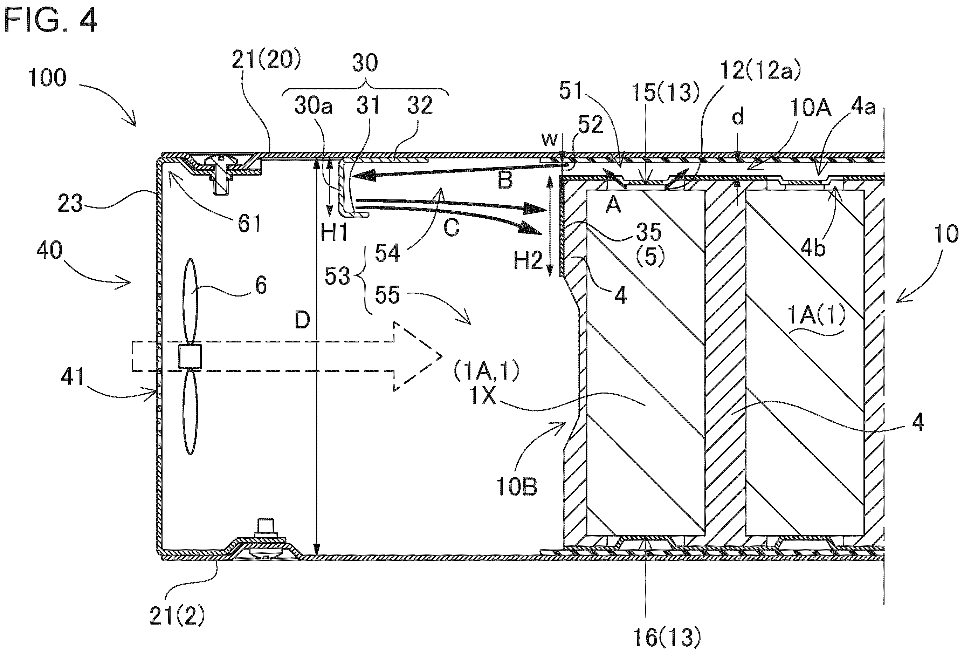

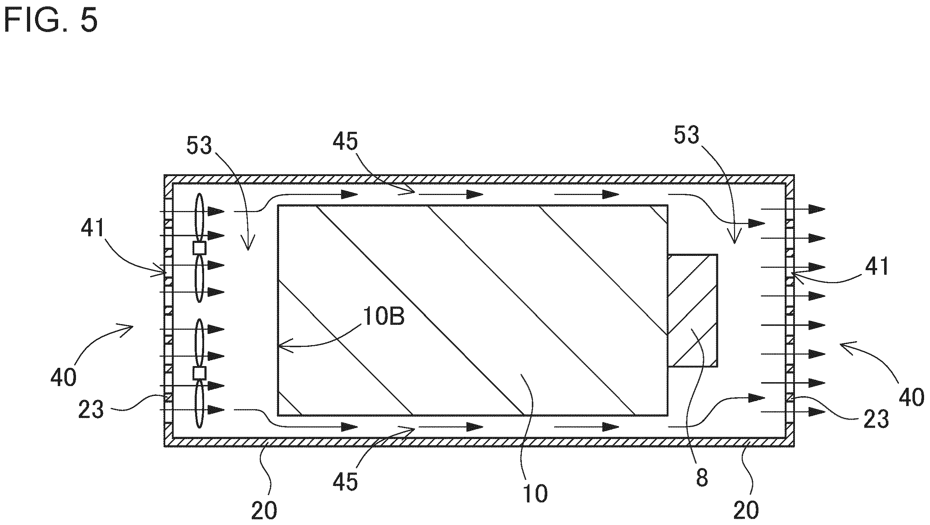

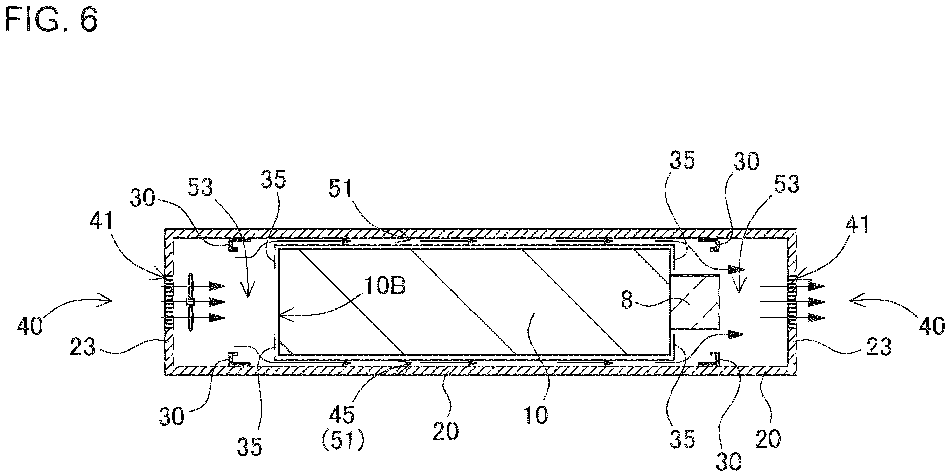

FIG. 1 is a perspective view of the power supply device 100 showing its overall structure. FIG. 2 is a schematic cross-sectional view of the power supply device 100 in FIG. 1. FIG. 3 is an enlarged schematic cross-sectional view of a main part of the power supply device 100. FIG. 4 is a schematic cross-sectional view of a power supply device in another example. FIGs. 5 and 6 are each a schematic cross-sectional view showing an example flow of cooling air. The power supply device 100 is, for example, a battery module or a battery pack including the multiple battery cells 1. The power supply device 100 includes the battery block 10 including the multiple battery cells 1 and the case 2 housing the battery block 10.

### (Battery Cell 1)

The battery cells 1 each have a first end face 15 with the opening 12a of the discharge valve 12. The battery cells 1 may be lithium-ion batteries. The power supply device 100 including the lithium-ion batteries, which have a large charge and discharge capacity relative to their capacity and weight, can have a larger charge and discharge capacity, as well as having a smaller external size and a lighter weight. However, the power supply device 100 according to one or more embodiments of the present disclosure may include the battery cells 1 that are not lithium-ion batteries, and may include other secondary batteries, or for example, any other rechargeable batteries such as other nonaqueous electrolyte secondary batteries.

Each battery cell 1 includes positive and negative electrodes 13 on its two ends. The battery cell 1 has the opening 12a of the discharge valve 12 in the first end face 15. The battery cell 1 has the first end face 15 that is an end face adjacent to the discharge valve 12 and a second end face 16 opposite the first end face 15. The battery block 10 in FIG. 2 includes cylindrical batteries 1A as the battery cells 1. The cylindrical batteries each include a cylindrical metal case housing electrodes and an electrolyte. The metal case has a sealed structure including an exterior can having a closed bottom and an opening to which a seal plate is hermetically fixed. The exterior can is formed by pressing a metal plate. The seal plate is hermetically fixed to the periphery of the opening of the exterior can by clinching with an insulating gasket between the seal plate and the periphery of the opening. The battery cells are not limited to the cylindrical batteries and may be any batteries each having the first end face with the opening of the discharge valve and the electrodes, such as rectangular batteries.

Each battery cell 1 includes the discharge valve 12 to prevent the metal case from breaking when the internal pressure of the metal case increases abnormally. For example, in each cylindrical battery 1A, the opening of the exterior can, which is formed by pressing a metal plate, is hermetically sealed with the seal plate. The seal plate has the opening 12a to discharge, for example, an internal gas with the discharge valve 12 being open. The end face adjacent to the discharge valve is the first end face 15 of the battery cell 1. A cylindrical battery or a rectangular battery may have the opening of the discharge valve in a bottom plate of the exterior can and have a surface of the bottom plate as the electrodes. The battery cell may thus have a bottom surface of the exterior can as the first end face with the opening of the discharge valve and the electrodes. The discharge valve 12 opens when the internal pressure exceeds the set pressure, or for example, 1.5 MPa, to prevent breakage of the exterior can due to an increase in the internal pressure. The discharge valve 12 opens in response to an abnormality. Thus, the battery cell 1 also has a particularly high temperature when the discharge valve 12 opens. The discharge gas and the electrolyte (jet substance) discharged through the open discharge valve 12 have abnormally high temperatures. In particular, for the power supply device including nonaqueous electrolyte secondary batteries such as lithium-ion batteries as the battery cells 1, the discharge gas has an abnormally high temperature greater than or equal to 400 °C. For the lithium-ion batteries, which are filled with a nonaqueous electrolyte, the electrolyte with a high temperature may ignite with air to have a more abnormally high temperature when discharged outside the case 2. For other rechargeable batteries as well as the lithium-ion batteries, the discharge gas discharged through the open discharge valve 12 has a high temperature. Thus, the energy of the discharged substance is to be lowered and reduced before the discharged substance is discharged outside the case 2 to ensure safety.

### (Battery Block 10)

The battery block 10 includes the multiple battery cells 1. The battery block 10 includes a battery holder 4 holding the multiple battery cells 1 in position without displacement, and a lead plate 5 connecting the battery cells 1 in series or in parallel. In the battery block 10, the battery cells 1 are arranged side by side and parallel to one another to collectively define a substantially rectangular prism. The battery block 10 has the first end faces 15 of the multiple battery cells 1 aligned flush with one another in the battery holder 4. The battery block 10 has a discharge surface 10A for the jet substance including the first end faces 15 of the multiple battery cells 1 aligned flush with one another, and a cooling surface 10B to which the cooling air is blown to cool the battery block 10. The battery block 10 in FIG. 2, which includes the first end faces 15 of the battery cells 1 aligned adjacent to the upper surface of the battery block 10, has the discharge surface 10A for the jet substance that is the upper surface of the battery block 10. For example, the upper surface of the battery block 10 is merely an example and represents a specific surface of the battery block 10. The specific surface may be a surface other than the upper surface.

As shown in the cross-sectional view in FIG. 2, the battery holder 4 has, in its portions covering the first end faces 15 of the battery cells 1, through-holes 4a through which the jet substance passes. The through-holes 4a have an internal dimension greater than the external dimension of protruding electrodes 13a of the battery cells 1. Each through-hole 4a receives the corresponding protruding electrode 13a, with a discharge clearance 4b for the jet substance left between the protruding electrode 13a and the through-hole 4a.

### (Case 2)

The case 2 is an housing body housing the battery block 10. The case 2 has a hollow three-dimensional shape that can house the battery block 10. The case 2, with a structure that is closed but not hermetically sealed, discharges the jet substance from the battery cells 1 outside the case 2. The case 2 closes two ends of the case 2 with end face plates 23 and houses the battery block 10. The case 2 in FIG. 1 is a substantially rectangular prism and houses the battery block 10 including the multiple battery cells 1 in position in the battery holder 4.

The case 2 includes a tubular case body 20 having the two ends closed with the end face plates 23. The case 2 includes a pair of surface plates 21, a pair of second case plates 22 connected to the surface plates 21, and a pair of the end face plates 23 connected to the surface plates 21 and the second case plates 22. The case body 20 adjacent to a redirection area 54 is a quadrangular prism defined by the pair of upper and lower surface plates 21 and the pair of side plates 22. The surface plates 21 and the side plates 22 of the case body 20 are rectangular to define the case body 20 that is a quadrangular prism. The pair of side plates 22 and the pair of end face plates 23 define a peripheral wall 24.

The case 2 in FIG. 1 is a substantially rectangular prism. The case 2 may have protrusions and recesses on its outer surface or inner surface. The case 2 has corners that may be chamfered and may be partially curved. The case body 20 and the end face plates 23 do not limit the method for connecting the surfaces of the case 2, the features, and the structure to close the case 2. The case 2 may have, for example, the end face plates 23 connected to the case body 20 to have a closed structure. Although not shown, the case may be dividable into two parts, or specifically, an upper case and a lower case. The upper case and the lower case may be connected to each other using the open end faces of their peripheral walls as connection surfaces. The case may have its opening connected to a lid plate or a lid case to have a closed structure. The case may be an outer case. The case may be covered with another case, a cover, or a sheet or be stored in another storage case.

The case body 20 and the end face plates 23 of the case 2 may each be formed by pressing a metal plate. The case formed from metal has high heat resistance, high heat dissipation, and high shielding properties. The case with high heat dissipation can efficiently dissipate heat energy from the internal heat-generating components and the jet substance outside. The metal case with high shielding properties can reduce susceptibility to noise. The case body 20 and the end face plates 23 may be formed from a resin with high heat resistance, or for example, a thermoplastic resin with high strength and high heat resistance such as polycarbonate. The case may be a laminate of layers of a combination of different materials, or for example, metal and resin, with the different materials used for different portions of the case.

The case 2 has, in its inside, a guide clearance 51 to which the jet substance from the battery cells 1 is discharged and an expansion chamber 53 that receives the jet substance from the guide clearance 51. The case 2 has the guide clearance 51 between the discharge surface 10A of the battery block 10 and the inner surface of the case body 20, and the expansion chamber 53 inward from one of the end face plates 23 and between the end face plate 23 and the cooling surface 10B of the battery block 10. The expansion chamber 53 includes the redirection area and a blowing duct area. The redirection area 54 is located along the inner surface of the case body 20 and connects with the guide clearance 51. A blowing duct area 55 includes a middle portion of the expansion chamber 53. In the blowing duct area 55, air is blown. The battery block 10 is located in the case 2 in a specific orientation and discharges a jet substance toward the inner surface of the case body 20. The case 2 houses the battery block 10 with the discharge surface 10A of the battery block 10 facing the inner surface of the case body 20. The battery block 10 is located in the case 2 with the cooling surface 10B of the battery cell 1 facing one of the end face plates 23 of the case 2. The expansion chamber 53 is located inward from the end face plate 23. The case 2 houses the battery block 10 oriented as described above to define the guide clearance 51 for the jet substance between the case body 20 and the discharge surface 10A of the battery block 10 and the expansion chamber 53 inward from the end face plate 23. In the expansion chamber 53, the energy of the jet substance discharged to the guide clearance 51 from the battery cells 1 is lowered when discharged outside the case 2.

### (Guide Clearance 51)

The guide clearance 51 is located between the inner surface of the case body 20 and the discharge surface 10A of the battery block 10 in the case 2. The guide clearance 51 is a narrow clearance that allows the high-temperature, high-pressure jet substance discharged from any abnormal battery cell 1 to flow at high speed along the inner surface of the case body 20 to be discharged into the expansion chamber 53. The guide clearance 51 is a duct to discharge the jet substance from the battery block 10 into the expansion chamber 53. The guide clearance 51 is located adjacent to the discharge surface 10A of the battery block 10 in the case 2. In the power supply device 100 in FIG. 2, the upper surface of the battery block 10 serves as the discharge surface 10A for the jet substance. The discharge surface 10A of the battery block 10 faces the inner surface of the case body 20. The guide clearance 51 is located between the upper surface plate 21 of the case body 20 and the discharge surface 10A.

The guide clearance 51 is located adjacent to the discharge surface 10A and along the inner surface of the case body 20. The case 2 having the guide clearance 51 adjacent to the inner surface of one of the upper and lower surface plates 21 has the guide clearance 51 adjacent to the discharge surface 10A, and does not have the guide clearance 51 opposite the discharge surface 10A. This increases the design and positioning flexibility for the interior of the case 2. However, the guide clearance 51 or a discharge duct 45, through which the jet substance or the cooling air passes, may be located along the inner surface of the lower surface plate 21. For a power supply device including the case 2 housing the battery block 10 with its upper and lower surfaces serving as discharge surfaces 10A, guide clearances 51 may be located inward from both the upper and lower surface plates 21 of the case body 20 to discharge the jet substance into the expansion chamber 53.

The guide clearance 51 has an inner dimension (d) between the surface plate 21 of the case body 20 and the discharge surface 10A of the battery block 10. The guide clearance 51 with a narrower inner dimension (d) allows the jet substance to flow at high speed to be discharged into the expansion chamber 53. The guide clearance 51 with a wider inner dimension (d) allows the jet substance to be discharged into the expansion chamber 53 with a smaller pressure drop. The inner dimension (d) of the guide clearance 51 may be, for example, less than or equal to 5 mm, or more specifically, less than or equal to 3 mm as appropriate for the flow velocity and the pressure drop of the jet substance. This allows the jet substance to flow at high speed to be discharged into the expansion chamber 53. The jet substance is discharged through the narrow guide clearance 51 into the expansion chamber 53 having a large volume. The jet substance adiabatically expands to effectively decrease in temperature and pressure when discharged into the expansion chamber 53. A temperature decrease of the jet substance through adiabatic expansion occurs when the jet substance flows through the narrow guide clearance 51 into the expansion chamber 53 having a large volume and expands in volume. A greater temperature decrease through adiabatic expansion thus occurs when the guide clearance 51 has a narrower inner dimension (d) and the expansion chamber 53 has a larger volume. In the case 2 in FIG. 2, the guide clearance 51 and the expansion chamber 53 extend across the entire width of the upper surface plate 21 of the case body 20. The ratio between the inner dimension (d) of the guide clearance 51 and an internal dimension (D) between the upper and lower surface plates 21 of the case body 20 defining the expansion chamber 53, or d/D, may be set to less than or equal to 1/10, or more specifically, less than or equal to 1/30 to cause the guide clearance 51 to be narrower and the expansion chamber 53 to be larger. This can more effectively reduce the temperature and pressure of the jet substance through adiabatic expansion. The guide clearance 51 has the same width as one surface of the case body 20. The guide clearance 51 in FIG. 2 has the same width as the surface plates 21 of the case body 20.

### (Expansion Chamber 53)

The expansion chamber 53 is located between one of the end face plates 23 and the cooling surface 10B of the battery block 10. The expansion chamber 53 is located inside the case 2 and inward from at least one of the end face plates. FIG. 2 shows one end of the case 2. The power supply device 100 in the figure has the expansion chamber 53 inward from one of the end face plates 23. The expansion chamber 53 is located between the end face plate 23 and the cooling surface 10B of the battery block 10 and connects with the guide clearance 51. The expansion chamber 53 allows the jet substance flowing in through the guide clearance 51 to be discharged outside the case 2 through air holes 40 in the end face plate 23. The expansion chamber 53 allows the cooling air flowing in through the air holes 40 to be blown to the cooling surface 10B of the battery block 10 to cool the battery block 10.

In the expansion chamber 53, the high-temperature, high-pressure jet substance discharged from the guide clearance 51 diffuses into the internal air and decreases in pressure and temperature, thus decreasing in kinetic energy and heat energy. The expansion chamber 53 shown in FIG. 2 is located inward from one end of the case body 20 and between one of the end face plates 23 and the cooling surface 10B of the battery block 10. The expansion chamber 53 shown in the cross-sectional view in FIG. 2 includes the redirection area 54 adjacent to the upper surface plate 21 of the case body 20 and the blowing duct area 55 below the redirection area 54. In the blowing duct area 55, the cooling air flowing in through the air holes 40 is blown to the cooling surface 10B of the battery block 10 to cool the battery cells 1 in the normal state in which the battery cells 1 do not discharge a jet substance. For an abnormality in which any of the battery cells 1 discharges a jet substance, the jet substance flowing in through the redirection area 54 is mixed with the internal air and diffuses in the blowing duct area 55 to be discharged outside through the air holes 40. The expansion chamber 53 thus includes the redirection area 54 into which the jet substance flows from the guide clearance 51. The redirection area 54 is located inward from the case body 20, and causes the jet substance to be discharged to the blowing duct area 55 in the middle portion of the expansion chamber 53 to be discharged outside the case 2 through the air holes 40.

### (Redirection Area 54)

In the redirection area 54, the jet substance flowing in from the guide clearance 51 is redirected to the blowing duct area 55. In the redirection area 54 in FIG. 2, the jet substance (an arrow B) flowing in from the guide clearance 51 is redirected to a direction indicated by arrows C. The jet substance redirected from the direction indicated by the arrow B to the direction indicated by the arrows C has a flow direction away from the end face plate 23. The jet substance discharged through any of the discharge valves 12 disperses in the blowing duct area 55 through the redirection area 54 without being directly discharged through the air holes 40, and is discharged outside the case 2 through the air holes 40. In the expansion chamber 53, the jet substance repeatedly hits, comes in contact with, or is redirected by components in the case 2 until the jet substance is redirected toward the air holes 40, and is also diffused. During this process, the jet substance loses or decrease the momentum and the straightness, thus decreasing in the kinetic energy and the heat energy. The redirection area 54 in FIG. 2 includes a first hit wall 30 that redirects the jet substance flowing in by allowing the jet substance to hit its surface. The first hit wall 30 is at a hitting position of the jet substance flowing in from the guide clearance 51 to redirect the jet substance that hits its surface.

The redirection area 54 described above, in which the first hit wall 30 and a second hit wall 35 face each other, allows the high-temperature, high-pressure jet substance flowing in to be mixed with the air in the blowing duct area 55 and disperse uniformly to effectively decrease in both temperature and pressure. However, the structure of the redirection area 54 in one or more embodiments of the present disclosure is not limited to the above structure, and may be any structures that can redirect the jet substrate flowing in to the blowing duct area 55. The structure of the redirection area 54 may be any structure that can redirect and disperse the jet substance to the blowing duct area. Examples include, although not shown, a structure that redirects the jet substance with the first hit wall alone to disperse the jet substance to the blowing duct area and a structure that causes the jet substance to hit surfaces of multiple porous plates arranged apart in the flow direction of the jet substance to discharge the jet substance into the blowing duct area in a dispersed manner.

### (Blowing Duct Area 55)

In normal use in which the battery cells 1 do not discharge a jet substance, the blowing duct area 55 allows the cooling air to be blown to the cooling surface 10B of the battery block 10 to cool the battery block 10. In an abnormal state in which any of the battery cells 1 discharges a jet substance, the blowing duct area 55 allows the jet substance flowing in from the redirection area 54 to diffuse and be dispersed into the multiple air holes 40 to be discharged outside the case 2. The battery block 10 includes the cooling surface 10B located in the blowing duct area 55. The battery block 10 is cooled by the cooling air blown through the blowing duct area 55. The cooling air blown to the cooling surface 10B cools the surface of the battery cell 1 exposed from the battery holder 4, cools the battery cells 1 arranged inside through the battery holder 4, or cools the battery cells 1 with a thermal conductive layer (not shown) on the cooling surface 10B.

The battery holder 4 may have, particularly in its portion with the cooling surface 10B of the battery block 10, a thickness different from the thicknesses of the other portions. The battery holder 4 may be partially thinner. As shown in FIG. 4, for example, the battery holder 4 may be thicker in its portion with the second hit wall 35 and thinner in its portion with the cooling surface 10B of the battery block 10. This lowers the energy of the jet substance, and allows efficient cooling with the cooling air with the battery block 10 being protected.

### (Air Hole 40)

The end face plate 23, having the expansion chamber 53 inside, has the air holes 40 extending through the end face plate 23. The air holes 40 are arranged in a middle portion of the power supply device 100 (end face plate 23) in the height direction of the power supply device 100 (end face plate 23). The air holes 40 are located not to face the first hit wall 30 in the height direction of the end face plate 23. The cooling air drawn into the expansion chamber 53 in the case 2 through the air holes 40 flows through the blowing duct area 55 and is blown to the cooling surface 10B of the battery block 10 to cool the battery block 10. The first hit wall 30 has a height, as well as the positional relationships with a blower fan 6 and a passage clearance 52, that allows the cooling air flowing through the blowing duct area 55 to flow into the passage clearance 52 in the guide clearance 51, to which the jet substance from the battery cells 1 is discharged. The cooling air is thus blown to the battery block 10 while flowing through the guide clearance 51, cooling the battery block 10. The cooling air flowing through the guide clearance 51 can cool the battery block 10 from an area near the discharge surface 10A. The jet substance discharged through the first end faces 15 of the battery cells 1 flows through the guide clearance 51, the redirection area 54, and the blowing duct area 55, and is discharged outside the case 2 through the air holes 40 in the end face plate 23.

In normal use, the power supply device 100 causes the cooling air flowing into the case 2 through the air holes 40 in the end face plate 23 to pass through the blowing duct area 55 in the expansion chamber 53 and be blown to the cooling surface 10B of the battery block 10, thus efficiently cooling the battery cells 1. For an abnormality in which any of the discharge valves 12 opens, the power supply device 100 causes the high-temperature, high-pressure jet substance discharged through the opening 12a of the discharge valve 12 in the battery cell 1 to pass through the passage clearance 52 through the guide clearance 51 and flow into the redirection area 54. The power supply device 100 then causes, with the first hit wall 30 and the second hit wall 35 in the redirection area 54, the jet substance to diffuse into the expansion chamber 53 to be discharged outside the case 2 through the air holes 40 in the end face plate 23. This prevents an external fire.

The air holes 40 in FIG. 2 are arranged in the end face plate 23 perpendicular to the surface plates 21. The air holes 40 in the figure are at a height between the distal end (lower end) of the first hit wall 30 and the lower surface plate 21. The air holes 40 in the figure are arranged in the middle portion of the end face plate 23 in the vertical direction. The middle portion of the end face plate 23 includes at least a middle portion in the vertical direction. The air holes 40 are located not to face the first hit wall 30 in the height direction of the end face plate 23. In FIG. 2, the first hit wall 30 is not in a blowing area through which the cooling air is blown through the air holes 40 in the middle portion of the end face plate 23 toward the cooling end face 10B. This prevents or reduces degradation of the cooling performance caused by the first hit wall 30, and allows the cooling air to be linearly blown to the cooling surface 10B of the battery block 10 through the air holes 40, allowing efficient cooling. The air holes 40 are arranged in the middle portion of the end face plate 23. The air holes 40 are thus arranged in a wide area. Multiple through-holes 41 that are the air holes 40 arranged in the wide area of the end face plate 23 allow a large amount of cooling air to be drawn in efficiently and blown toward a wide area of the cooling surface 10B, thus allowing efficient cooling.

The air holes 40 in the middle portion of the end face plate 23 are arranged not to cause the jet substance flowing from the guide clearance 51 into the expansion chamber 53 to be directly discharged outside the case 2. This structure more reliably prevents the high-temperature, high-pressure jet substance from being directly discharged outside the case 2 and causing a fire outside the case 2. This improves safety for external fire prevention. As shown in FIG. 2, the air holes 40 in the middle portion of the end face plate 23 are not arranged in a portion of the end face plate 23 behind the first hit wall 30. When the jet substance discharged through the discharge valves 12 passes by the first hit wall 30 without hitting the first hit wall 30, the air holes 40 that are not in the portion of the end face plate 23 behind the first hit wall 30 can prevent the high-temperature, high-pressure jet substance with momentum from flowing straight to be discharged outside the case 2, causing an external fire. This prevents external fires to improve safety.

The air holes 40 are openings through which air outside the case 2 is drawn in. In addition, the air holes 40 are openings through which the jet substance discharged through the discharge valves 12 is discharged outside the case 2. The jet substance discharged through the discharge valves 12 is discharged outside the case 2 through openings in the case 2, including the air holes 40. The air holes 40 in FIG. 2 are the multiple through-holes 41. The multiple through-holes 41 allow outside air to be drawn in smoothly in a dispersed manner, and also allow the jet substance to be discharged outside the case 2. The through-holes 41 may have any shape. For example, the through-holes 41 may be circular, triangular, quadrangular, polygonal, star-shaped, cross-shaped, oval, slits, reticulated, or meshes. The inner diameter, the opening ratio, the shape, and the number of through-holes 41 are determined as appropriate to achieve the cooling performance and external fire prevention. To improve the cooling performance, permeation resistance is to be smaller. For example, the total permeation resistance may be reduced by increasing the inner diameter and increasing the number of through-holes 41. To prevent an external fire, the permeation resistance of the discharge gas may be increased by reducing the inner diameter, and the total permeation resistance may be reduced by increasing the number of through-holes 41. Thus, the inner diameter and the number of through-holes 41 may be set to lower the energy of the jet substance such as the discharge gas with the first hit wall 30 and through the expansion chamber 53, allowing the jet substance to be smoothly discharged in a dispersed manner. The inner diameter and the number of through-holes 41 are optimally designed based on the capacity of the battery cells 1, or in other words, the amount of discharge gas discharged through the open discharge valves 12 and the amount of air drawn in for cooling. For example, for cylindrical lithium-ion batteries commonly referred to as 18650, the inner diameter may be 0.5 to 3 mm, and the number of through-holes 41 may be 10 to 100. The structure according to one or more embodiments of the present disclosure does not specify the inner diameter or the number of through-holes. The inner diameter and the number of through-holes are set to optimal values based on, for example, the type, the number, and the capacity of the battery cells as well as the safety and the cooling performance to be achieved. The air holes 40 may be a mesh of a porous plate with the multiple through-holes 41.

The air holes 40 may be in a metal mesh. The mesh may be prepared by forming many through-holes 41 that are circular, quadrangular, or in another shape in a metal plate by, for example, punching or etching. The mesh may be a wire mesh including many metal wires or plates knitted together. The metal mesh may be located inside or outside the case 2 to cover the air holes 40. The openings of the metal mesh can prevent ignition and an external fire caused by the jet substance. The openings of the metal mesh do not melt with heat from the jet substance. The openings thus maintain their initial inner diameter and size to allow the jet substance to be stably and efficiently discharged to prevent an external fire. Metal with particularly high thermal conductivity can quickly absorb the heat from the jet substance and reduce the heat energy, thus reducing the likelihood of an external fire. The mesh allows gases to pass through, but does not allow sparks or flames larger than the size of the through-holes 41 to pass through. The cooling performance with air blown through the openings can be higher when the mesh is formed from metal with high cooling efficiency than when the mesh is formed from a resin. The metal may be, for example, stainless steel, aluminum, or an alloy of these metals.

The cooling air is drawn in through the air holes 40 in one of the end face plates 23 of the case body 20 and blown to the cooling surface 10B of the battery block 10 to cool the battery block 10. After cooling the battery block 10, the cooling air is discharged outside the case 2 through open clearances in the case 2, such as air holes 40 in the other of the end face plates 23 shown in FIGs. 5 and 6. Although the structure according to one or more embodiments of the present disclosure does not specify the flow and the discharge of the cooling air, the cooling air passes, for example, between the side surfaces, the upper surface, or the lower surface of the battery block 10 and the case body 20, through clearances between the battery cells 1, and through blowing ducts to be discharged outside the case 2 through the open clearances in the case. As shown in the schematic horizontal sectional view in FIG. 5, for example, the cooling air may be drawn in through the air holes 40 in the end face plate 23 at the left end of the case 2, cool the battery block 10 while passing through right and left discharge ducts 45 between the side surfaces of the battery block 10 and the side surfaces of the case body 20, and be discharged outside the case 2 through the air holes 40 in the end face plate 23 at the right end of the case 2. As shown in the schematic vertical sectional view in FIG. 6, the cooling air may also cool the battery block 10 while passing through the guide clearance 51 between the upper surface (discharge surface 10A) of the battery block 10 and the upper surface of the case body 20 and/or through the discharge duct 45 or the guide clearance 51 between the lower surface of the battery block 10 and the lower surface of the case body 20. The cooling air is then discharged outside the case 2 through the air holes 40 in the end face plate 23 at the right end of the case 2. For the power supply device 100 that guides the cooling air into the guide clearance 51 for discharging the jet substance to discharge the cooling air outside the case 2 as shown in FIG. 6, expansion chambers 53 are located inward from the end face plates 23 at the two ends of the case 2 as shown in this figure. A jet substance may be discharged outside the case 2 through the expansion chambers 53 adjacent to the two ends. The case 2 in FIG. 6 has guide clearances 51 adjacent to both the upper and lower surfaces of the battery block to guide the jet substance and the cooling air. However, the jet substance and the cooling air may be guided through different channels or ducts.

### (Blower Fan 6)

The power supply device 100 includes the blower fan 6 that forcibly blows the cooling air. The blower fan 6 may be located inward or outward from the end face plate 23 having the blowing duct area 55 inside. The blower fan 6 may be adjacent to or in contact with the air holes 40. In FIG. 2, the blower fan 6 is fixed in the blowing duct area 55 located inward from the end face plate 23. The blower fan 6 causes air outside the case 2 to pass through the air holes 40 and be drawn into the blowing duct area 55 in the expansion chamber 53, and blows the air toward the cooling surface 10B of the battery block 10. One or more blower fans 6 are arranged as appropriate for, for example, the arrangement of the air holes 40. The end face plate 23 shown in the perspective view in FIG. 1 has the multiple air holes 40 in its middle portion in the vertical direction. The end face plate 23 has the multiple air holes 40 in an area wider in the width direction than in the vertical direction. Multiple (two in FIG. 5) blower fans 6 may be arranged side by side on the inner surface of the end face plate 23 as appropriate for the air holes 40 arranged in a dispersed manner in the area wider in the width direction than in the vertical direction. The cooling air blown toward the cooling surface 10B of the battery block 10 to cool the battery block 10 is discharged outside the case 2 through the open clearances in the case 2, such as the air holes 40 in the other of the end face plates 23.

Each end face plate 23 has the multiple through-holes 41, which are the air holes 40, in a dispersed manner. The end face plate 23 in FIG. 2 has the blower fan 6 fixed to the middle portion of its inner surface in the vertical direction having the air holes 40. The blower fan 6 forcibly draws in the cooling air through the air holes 40 and blows the cooling air to the cooling surface 10B of the battery block 10. The power supply device 100 described above includes the blower fan 6 on the end face plate 23, which has the expansion chamber 53 inside. Although not shown, blower fans may be arranged on the end face plates at the two end faces. The blower fan 6 can draw in air, discharge air, or blow air through the air holes 40. The blower fan 6 in FIG. 2 draws in outside air through the air holes 40 and forcibly blows the air toward the cooling surface 10B of the battery block 10 as the cooling air. Although not shown, the blower fan may discharge or blow the air in the case outside the case to cause outside air to be drawn into the case to facilitate airflow and ventilation in the case. This also allows the air to flow toward and be blown to the battery block 10 as the cooling air. The structure shown in FIGs. 5 and 6 draws in the cooling air through the air holes 40 in one of the end face plates 23 and discharges the cooling air through the open clearances in the case such as the air holes in the other of the end face plates. This structure cools the battery block 10 by causing the cooling air to flow and be ventilated in the longitudinal direction of the elongated case 2 without stagnation in the case 2. In addition, the structure can dissipate heat energy of a heat-generating semiconductor component such as a DC-DC converter as a power circuit, or a power supply 8. The power supply device 100 described above effectively uses the end portion of the elongated case 2, and can have improved cooling performance.

### (First Hit Wall 30)

The first hit wall 30 redirects the jet substance discharged through the opening 12a of the discharge valve 12 in any of the battery cells 1 by allowing the jet substance to hit the first hit wall 30. In the redirection area 54 in the case 2, the first hit wall 30, which changes the flow direction of the jet substance by allowing the jet substance to hit the first hit wall 30, is at the hitting position of the jet substance flowing in from the guide clearance 51. As shown in FIG. 2, when any (a battery cell 1X nearest the first hit wall 30 in FIG. 2) of the battery cells 1 has an abnormality and a jet substance is discharged through the discharge valve 12 with momentum and flows straight (an arrow A), the jet substance flowing in from the guide clearance 51 is guided to the redirection area 54 and moves in a direction toward the first hit wall 30 along the inner surface of the surface plate 21 (the arrow B). The jet substance then hits the first hit wall 30 to be reversed and redirected, flows in the direction away from the end face plate 23 (the arrows C), and diffuses into the blowing duct area 55.

The first hit wall 30 in FIG. 2 includes a vertical plate 30a, a bent portion 31, and a fixed portion 32. The vertical plate 30a redirects the jet substance by allowing the jet substance to hit the vertical plate 30a. The bent portion 31 protrudes from the vertical plate 30a. The fixed portion 32 connects the first hit wall 30 to the surface plate 21. The first hit wall 30 shown in the cross-sectional view in FIG. 2 includes the bent portion 31 at the lower edge of the vertical plate 30a vertically fixed to the surface plate 21 (upper surface) of the case body 20. The first hit wall 30 is thus groove-shaped in a cross section. The first hit wall 30 is formed from, covered with, or layered with a heat-resistant material that is resistant to the heat from the jet substance. The first hit wall 30 may be formed by bending a metal plate. The first hit wall 30 shown in FIG. 2 is formed by bending a metal plate to include the fixed portion 32 at the upper edge of the vertical plate 30a and the bent portion 31 at the lower edge of the vertical plate 30a. The fixed portion 32 is fixed to the inner surface of the surface plate 21. The first hit wall 30 in FIG. 2 includes the fixed portion 32 fixed to the surface plate 21 of the case body 20, the vertical plate 30a that is vertical to the surface plate 21, and the bent portion 31 parallel to the surface plate 21. The bent portion 31 protrudes toward the cooling surface 10B of the battery block 10, causing a hit surface for the jet substance flowing in from the guide clearance 51 to be groove-shaped. The groove-shaped first hit wall 30 allows the jet substance flowing to the redirection area 54 along the inner surface of the case body 20 to flow opposite to the end face plate 23 as indicated by the arrows C and diffuse into the blowing duct area 55.

In the redirection area 54 in the case 2, the first hit wall 30 is at the hitting position of the jet substance flowing in from the guide clearance 51. The first hit wall 30 is appropriately spaced from the discharge surface 10A between a corner 61 at which the end face plate 23 and the surface plate 21 are connected to each other and the battery block 10 (discharge surface 10A). This allows the jet substance to hit the first hit wall 30 and be redirected, reducing or lowering the energy. The first hit wall 30 may be positioned near the discharge surface 10A to allow the jet substance to reliably hit the first hit wall 30. The first hit wall 30 may have a lower height (H1) to allow the jet substance to efficiently hit the first hit wall 30. The first hit wall 30 may be located away from the discharge surface 10A to allow the redirection area 54 to have a sufficient length. The first hit wall 30 positioned as described above can protect the corner 61 of the case 2 and the end face plate 23 behind the first hit wall 30 against a direct hit from the jet substance, thus preventing an external fire. Components that are to be protected against a direct hit from the jet substance may be located behind the first hit wall 30. The first hit wall 30 positioned as described above may be located near or adjacent to the corner 61. The first hit wall 30 can thus avoid obstructing the blow of the cooling air drawn in through the air holes 40 in the middle portion of the end face plate 23 or obstructs the blow of the cooling air by a lesser degree. Although not shown, the end face plate may serve as the first hit wall. The first hit wall 30 at this position can effectively use the corner 61 of the case 2, which tends to remain unused. The position of the first hit wall 30 on the inner surface of the surface plate 21 is appropriately determined based on, for example, the output from the batteries, the case size, and design limitations to achieve external fire prevention and cooling performance improvement.

The first hit wall 30 on the inner surface of the surface plate 21 may be located away from the nearest battery cell 1X by 1 cm or greater, or more specifically, 2 cm or greater. When the first hit wall 30 is located farther from the discharge surface 10A, or in other words, nearer the end face plate 23, with respect to the air holes 40 in the middle portion of the end face plate 23, the height of the first hit wall 30 obstructs or affects the blow of the cooling air from the air holes 40 by a lesser degree, preventing or reducing degradation of the cooling performance and increasing the cooling performance. The first hit wall 30 positioned as described above also increases an open area in the redirection area 54, allowing the jet substance to smoothly flow into the blowing duct area 54. The first hit wall 30 also allows the cooling air to be blown and flow easily along the redirection area 54, the guide clearance 51, and the surface plate 21.

The first hit wall 30 has a height (H1) greater than the inner dimension (d) of the guide clearance 51. The first hit wall 30 in FIG. 2 has its distal end (lower end) at a lower position than the discharge surface 10A. The first hit wall 30 protrudes from the inner surface of the surface plate 21, covers the redirection area 54 through which the jet substance moves, and has a height large enough to receive the jet substance. The first hit wall 30 can thus catch, be hit by, and redirect the high-pressure, high-temperature jet substance flowing straight with momentum. When the first hit wall 30 is at a position lower than the guide clearance 51 or the first hit wall 30 has its lower end at a position higher than the discharge surface 10A, a smaller amount of jet substance hits the first hit wall 30. This cannot prevent an external fire efficiently. The height (H1) of the first hit wall 30 may be greater than or equal to 1.5 times the guide clearance 51(d) to be large enough to receive the jet substance. When the first hit wall 30 is too high, the first hit wall 30 covers a larger area of the cooling surface 10B, and thus blocks or obstructs the movement of the cooling air by a greater degree. The height (H1) of the first hit wall 30 is, for example, less than or equal to 20 times, or more specifically, less than or equal to 10 times the guide clearance 51. The height (H1) of the first hit wall 30 may be less than or equal to one-third, or more specifically, less than or equal to one-fourth of the height (height in the longitudinal direction) of the battery cells 1. The first hit wall 30 with this height does not cover at least two-thirds or three-fourths of the height of the battery cells 1 and leaves the cooling surface 10B to be uncovered, thus preventing or reducing degradation of the cooling performance. As shown in FIG. 3, the first hit wall 30 can catch the jet substance flowing straight with momentum within a range defined by an angle (α) between the horizontal direction of the discharge surface 10A and the line connecting the end of the discharge surface 10A adjacent to the passage clearance 52 to the distal end (lower end) of the bent portion 31 in the first hit wall 30. The first hit wall 30 may have a height (H1) that allows the angle (α) to be less than or equal to 30 degrees, or more specifically, less than or equal to 25 degrees. The first hit wall 30 with this height can catch, be hit by, and redirect the jet substance that flows straight. The cooling air drawn in through the air holes 40 is not blocked by the first hit wall 30, and decreases in volume and velocity by a lesser degree to be blown to the battery block 10, improving the cooling performance. The first hit wall 30 is to have a height and a shape that can efficiently achieve both external fire prevention and cooling performance improvement based on its position relative to the guide clearance 51.

The first hit wall 30 is shaped to be hit by the jet substance efficiently. The first hit wall 30 in FIG. 2 is groove-shaped or U-shaped in a cross section. The bent portion 31 in the first hit wall 30 protrudes toward the battery block 10, or in other words, in a direction opposite to the direction in which the jet substance discharged through the discharge valves 12 moves. The bent portion 31 can guide the jet substance to the vertical plate 30a. The bent portion 31 allows the jet substance to reliably hit the vertical plate 30a, increasing the amount of jet substance hitting the vertical plate 30a. This improves hitting efficiency and a capturing rate with respect to an area. The bent portion 31, or for example, the bent portion 31 in the first hit wall 30, can prevent, for example, the jet substance from slightly deviating from the vertical plate 30a, grazing the vertical plate 30a, or hitting an end of the vertical plate 30a to be redirected insufficiently to flow straight without losing its momentum. The bent portion 31 allows the simple first hit wall 30 to have a smaller size, and can achieve external fire prevention efficiently. The bent portion 31, allowing the first hit wall 30 to have a smaller size, protrudes in a forward direction with respect to the movement of the cooling air, thus reducing the degree by which the movement of the cooling air is blocked or obstructed. This improves the cooling performance. The bent portion 31 in the first hit wall 30 allows the first hit wall 30 to have a small height and a small size to allow the jet substance to hit the first hit wall 30 more efficiently, with higher capturing rate. The bent portion 31 also reduces the degree by which the cooling air is blocked, thus achieving external fire prevention and cooling performance improvement. The fixed portion 32 in FIG. 2 connected to the vertical plate 30a extends toward the discharge surface 10A along the surface plate 21 and is layered on the surface plate 21, thus protecting the surface plate 21.

The first hit wall 30 in FIG. 2 is a plate, and can thus contribute to simplification, cost reduction, and weight reduction. The first hit wall 30 that is a plate is unclosed and does not cover the redirection area 54. The first hit wall 30 is not a dedicated path such as a discharge duct for the jet substance and does not include a partition or a cover that may obstruct the cooling air. The first hit wall 30 thus contributes to size reduction of the case, and also improves the cooling performance by allowing the cooling air to flow into the redirection area 54. The simple first hit wall 30 does not have a complex shape such as the shapes of the labyrinth areas or the bypass paths, and does not or is less likely to obstruct the blow or flow of cooling air, thus improving the cooling performance. The first hit wall 30 may not have the shape shown in the figure, and may have any other shape that allows the jet substance to hit the first hit wall 30 at a predetermined position. Although not shown, the first hit wall 30 may have, for example, a three-dimensional shape, protrusions and recesses, a groove, an inclined surface, or a curved surface. The surface plate may have steps or protrusions and recesses to serve as the first hit wall. The first hit wall that is a plate may be layered on the end face plate. The first hit wall that is L-shaped or U-shaped may be located at the corner.

A guide 7 may be located in the guide clearance 51. The guide 7 allows the jet substance discharged through the discharge valves 12 to come in contact with and hit the guide 7 to guide the jet substance toward the first hit wall 30 or the second hit wall 35. For example, the guide 7 indicated by the dot-dash line in FIG. 3 is located in the guide clearance 51, and allows the jet substance discharged through the discharge valves 12 to come in contact with and hit the guide 7 to guide the jet substance toward the first hit wall 30. The guide 7 can also adjust the inner dimension (d) of the guide clearance 51. The guide clearance 51(d) with the guide 7 is a clearance between the discharge surface 10A and the guide 7 facing the discharge surface 10A. The guide 7 may be, for example, protrusions and recesses, an inclined surface, a groove, or a plate wall formed on the case body 20, the battery holder 4, or the lead plate 5. The guide 7 may be a separate component connected to the case body 20, the battery holder 4, or the lead plate 5. Although not shown, the guide may be located in the expansion chamber, rather than in the guide clearance.

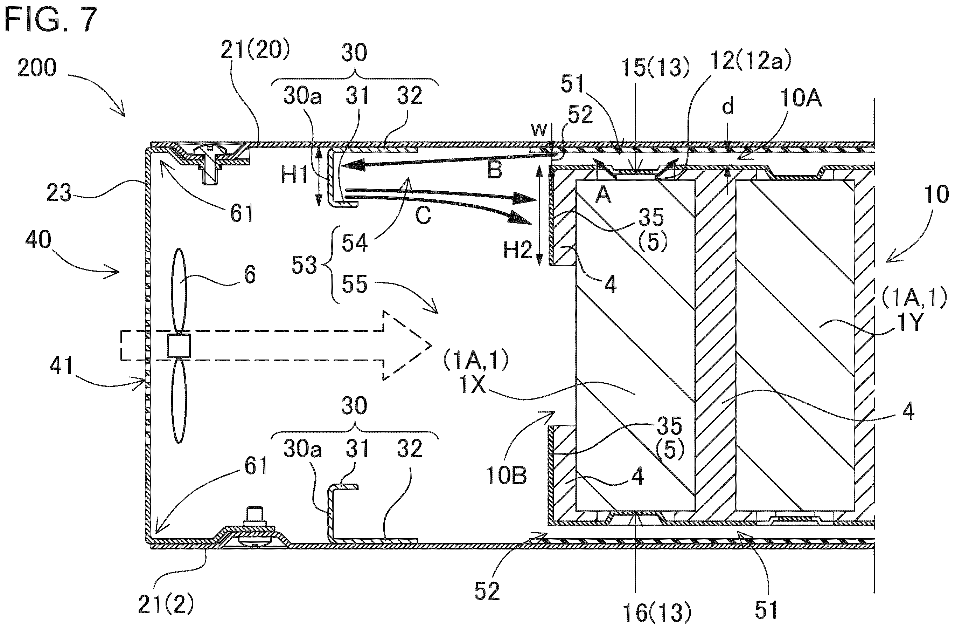

The first hit wall 30 can be fixed to the case body 20. The first hit wall 30 in FIG. 2 is fixed to the upper surface plate 21. The first hit wall 30 extends across the entire width of the surface plate 21. The first hit wall 30 in FIG. 2 is located with the vertical plate 30a parallel to the end face plate 23 and extending in the lateral direction of the surface plate 21. The first hit wall 30 has two side surfaces connected to the side plates 22 or in contact with and fixed to the side plates 22, thus preventing the jet substance before or after hitting the first hit wall 30 from leaking or slipping out through the two side surfaces. Although not shown, the first hit wall may include bent portions on its two side surfaces. The first hit wall 30 can be located inside the case body 20. The first hit wall 30 may also be located on the side plates (not shown) as well as on the lower surface plate 21 (FIG. 7) of the case body 20.

The first hit wall 30 is at the hitting position of the jet substance discharged through the guide clearance 51. The first hit wall 30 can be located adjacent to one or both of the end face plates 23 of the case body 20. FIG. 2 shows the first hit wall 30 located adjacent to one (the left end in the figure) of the end face plates 23 of the case body 20. As shown in FIG. 6, first hit walls 30 can be located adjacent to the end face plates 23 at the left and right ends of the case body 20. When the jet substance discharged through the discharge surface 10A moves either to the left or to the right in the guide clearance 51, the jet substance can hit one of the first hit walls 30 adjacent to the left and right end face plates 23, be redirected, and be discharged outside the case 2 through the air holes 40 through the expansion chamber 53.

### (Second Hit Wall 35)

The second hit wall 35 redirects, by allowing the jet substance redirected by the first hit wall 30 to further hit its surface, the jet substance to cause the jet substance to diffuse into the expansion chamber 53. In the redirection area 54, the second hit wall 35 is located between the first hit wall 30 and an outlet of the guide clearance 51, and is at a position at which the jet substance redirected by the first hit wall 30 hits the second hit wall 35. The second hit wall 35 in FIG. 2 is located adjacent to the cooling surface 10B of the battery block 10. The second hit wall 35 is at the position at which the second hit wall 35 allows the jet substance redirected by the first hit wall 30 to hit the second hit wall 35 to be dispersed into the blowing duct area 55.

The second hit wall 35 is a heat-resistant plate. The heat-resistant plate is formed from, for example, a heat-resistant material such as a metal plate or a heat-resistant resin. The lead plate 5 or the battery holder 4 can be used as the second hit wall 35. When the lead plate 5 or the battery holder 4 is used as the second hit wall 35, another component is not used, thus reducing costs and space. The second hit wall 35 may be layered on the lead plate 5 or the battery holder 4. The second hit wall 35 may be a combination of the lead plate 5 and the battery holder 4. The second hit wall 35 shown in FIG. 2 is located on a surface of the battery holder 4. The second hit wall 35 in the figure is the lead plate 5 located on a surface of the battery holder 4. The lead plate 5 is a metal plate and has high heat resistance and high heat dissipation. A thick lead plate on the output end having higher heat resistance and higher heat dissipation may serve as the second hit wall 35.

The second hit wall 35 has, between the second hit wall 35 and the inner surface of the case 2 (the upper surface plate 21 in FIG. 2), the passage clearance 52 through which the jet substance from the guide clearance 51 can pass. The passage clearance 52 allows the jet substance flowing through the guide clearance 51 to pass through toward the surface of the first hit wall 30. The redirection area 54 described above allows the jet substance flowing in through the guide clearance 51 to hit the surface of the first hit wall 30 and redirects the jet substance in a direction toward the second hit wall 35. The second hit wall 35, which is at the hitting position of the jet substance redirected by the first hit wall 30, can redirect the jet substance and cause the jet substance to be dispersed into the blowing duct area 55.

The second hit wall 35 in FIG. 2 is integral with the battery holder 4, and leaves an open clearance (w) of the passage clearance 52 for the jet substance to be the same as the inner dimension of the guide clearance 51. This structure allows the jet substance flowing through the guide clearance 51 to smoothly pass through the passage clearance 52 to move and flow toward the first hit wall 30. Although not shown, for example, the second hit wall 35 may leave the passage clearance between the case body and the second hit wall to have the open clearance (w) narrower than the inner dimension (d) of the guide clearance, thus allowing the passage clearance to be used as an expansion valve to effectively achieve temperature decrease through adiabatic expansion. Conversely, the second hit wall 35 may leave the passage clearance to have the open clearance (w) wider than the inner dimension (d) of the guide clearance, thus allowing the jet substance to smoothly flow into the expansion chamber from the guide clearance.

The redirection area 54 in FIG. 2 includes the second hit wall 35 facing the first hit wall 30. The second hit wall 35 is a heat-resistant layer on the surface of the battery holder 5 in the battery block 10 and is integral with the battery block 10. The second hit wall 35 leaves the passage clearance 52 between the second hit wall 35 and the surface plate 21 of the case body 20 to allow the jet substance in the guide clearance 51 to flow toward the first hit wall 30.

The second hit wall 35 shown in the cross-sectional view in FIG. 2 may have a greater vertical width than the first hit wall 30. For example, the second hit wall 35 may have a vertical width greater than or equal to 1.5 times, or more specifically, about twice the vertical width of the first hit wall 30. This allows the jet substance redirected by the first hit wall 30 and flowing toward the surface of the second hit wall 35 to hit the surface of the second hit wall 35 more effectively and be dispersed into the blowing duct area 55 to be discharged.

The battery holder 4 has a clearance 4c in its portion covering the battery block 10, or for example, in its portion adjacent to the cooling surface 10B or the discharge surface 10A of the battery block 10 to improve thermal insulation or cooling efficiency. For example, the battery holder 4 in FIG. 3 has the clearance 4c inward from the second hit wall 35. The clearance 4c is in the battery holder 4 or between the battery holder 4 and the battery cell 1 to extend along the second hit wall 35.

The power supply device 100 causes the high-temperature, high-pressure jet substance discharged through the openings 12a of the discharge valves 12 in the battery cells 1 to hit the first hit wall 30 and the second hit wall 35 located in the redirection area 54 in the case 2 and diffuse in the expansion chamber 53, thus lowering and reducing the energy and the moving speed of the jet substance. The power supply device 100 weakens the straightness of the jet substance based on the travel distance and the stay duration of the jet substance in the case and discharges the jet substance outside the case 2 to prevent an external fire. Further, the cooling air flowing from outside passes through the expansion chamber 53 and is blown to the cooling surface 10B of the battery block 10 exposed to the expansion chamber 53, thus effectively cooling the battery cells 1.

### [EMBODIMENT 2]

A power supply device 200 in FIG. 7 includes first hit walls 30 on the upper and lower surface plates 21 of the case body 20 facing each other, and guide clearances 51 along the upper and lower surface plates 21. The battery block 10 has the first end faces 15 of the multiple battery cells 1 aligned flush with one another. In FIG. 7, the battery cells 1 are arranged with their orientations alternating with one another. The upper and lower surfaces of the battery block 10 serve as the discharge surfaces 10A for a jet substance. For example, the battery cell 1X nearest the first hit walls 30 is located with its first end face 15 facing upward, and an adjacent battery cell 1Y is located with its first end face 15 facing downward. When a jet substance is discharged through any of the discharge valves 12 adjacent to the upper discharge surface 10A, the jet substance moves to the redirection area 54 through the guide clearance 51 located adjacent to the inner surface of the upper surface plate 21, hits the first hit wall 30, flows to the blowing duct area 55 to diffuse, and is discharged outside the case 2 through the air holes 40 in the end face plate 23. When the jet substance is discharged through the lower discharge surface 10A, the jet substance moves to the redirection area 54 through the guide clearance 51 located adjacent to the inner surface of the lower surface plate 21, hits the first hit wall 30, flows to the blowing duct area to diffuse, and is discharged outside the case 2 through the air holes 40 in the end face plate 23. When discharged through any of the discharge surfaces 10A, the jet substance is discharged outside the case 2 from the air holes 40 through the guide clearance 51, the redirection area 54, the first hit wall 30, and the blowing duct area 55. This prevents an external fire. In the power supply device 200, the number of battery cells 1 with their first end faces 15 facing one of the surface plates 21 is reduced to half. This reduces the likelihood of fire spread and increases the flexibility of battery connection and arrangement.

The power supply device 200 in FIG. 7 includes the first hit walls 30 on the upper and lower surface plates 21 facing each other, and the air holes 40 in the middle portion of the end face plate 23 between the distal end (lower end) of the upper first hit wall 30 and the distal end (upper end) of the lower first hit wall 30. The air holes 40 are arranged in the middle portion of the end face plate 23 in the height direction of the end face plate 23. The air holes 40 are located not to face the first hit walls 30 in the height direction of the end face plate 23. The first hit walls 30 are not in the blowing area in which the cooling air is blown toward the cooling end face 10B through the air holes 40 in the middle portion of the end face plate 23. The upper and lower first hit walls 30 do not or are less likely to obstruct the blow of the cooling air. This allows the cooling air to be blown straight to the cooling surface 10B of the battery block 10 through the air holes 40, allowing efficient cooling.

In FIG. 7, the upper and lower first hit walls 30 have the same height, shape, arrangement, and structure. Although not shown, the upper and lower first hit walls 30 may have different heights, shapes, arrangements, or structures, increasing the positioning and design flexibility in the case while achieving external fire prevention and cooling performance. For example, one of the first hit walls may have a lower height than the other and be located adjacent to the discharge valves of the battery cells. One of the first hit walls may have a higher height than the other and be located away from the discharge valves of the battery cells. The battery cells 1 arranged with their first end faces 15 facing upward or downward can reduce the likelihood of thermal runaway escalated to adjacent battery cells 1. The upper and lower second hit walls 35 have the same height, shape, arrangement, and structure or different heights, shapes, arrangements, or structures in the same manner.

### INDUSTRIAL APPLICABILITY

The technique according to the above aspects of the present disclosure is effectively applicable to a power supply device that has high cooling performance and safely discharges a high-temperature, high-pressure jet substance discharged from a battery cell to prevent an external fire.

### REFERENCE SIGNS LIST

100, 200, 900 ... power supply device
1 ... battery cell
1A ... cylindrical battery
1X ... nearest battery cell
1Y ... adjacent battery cell
2 ... case
4 ... battery holder
4a ... through-hole
4b ... discharge clearance
4c ... clearance
5 ... lead plate
6 ... blower fan
7 ... guide
8 ... power supply
10 ... battery block
10A ... discharge surface
10B ... cooling surface
12 ... discharge valve
12a ... opening
13 ... electrode
13a ... protruding electrode
15 ... first end face
16 ... second end face
20 ... case body
21 ... surface plate
22 ... side plate
23 ... end face plate
24 ... peripheral wall
30 ... first hit wall
30a ... vertical plate
31 ... bent portion
32 ... fixed portion
35 ... second hit wall
40 ... air hole
41 ... through-hole
45 ... discharge duct
51 ... guide clearance
52 ... passage clearance
53 ... expansion chamber
54 ... redirection area
55... blowing duct area
61 ... corner
901 ... battery cell
930 ... redirection area
931 ... heat shield plate
940 ... air hole

## Claims

1. A power supply device, comprising:
a battery block including a plurality of battery cells; and
a case housing the battery block,
wherein (a) the case includes a case body being tubular and having two ends closed with end face plates,
(b) the plurality of battery cells have first end faces having openings of discharge valves,
(c) the battery block has
a discharge surface for a jet substance, the discharge surface including the first end faces of the plurality of battery cells aligned flush with one another, and
a cooling surface to be cooled by cooling air blown to the cooling surface, (d) the case has
a guide clearance between the case body and the discharge surface of the battery block to receive the jet substance, and
an expansion chamber between at least one of the end face plates and the cooling surface of the battery block to receive the jet substance,
(e) the at least one of the end face plates having the expansion chamber inside has a plurality of air holes extending through two surfaces of the at least one of the end face plates,
(f) the expansion chamber includes a redirection area and a blowing duct area inside, the redirection area is located along an inner surface of the case body, and the blowing duct area includes a middle portion of the expansion chamber,
(g) the power supply device allows the cooling air flowing into the expansion chamber through the plurality of air holes to be blown to the cooling surface of the battery block through the blowing duct area, and
the power supply device allows the jet substance discharged through the first end faces of the plurality of battery cells to flow to the guide clearance, the redirection area, and the blowing duct area to be discharged outside the case through the plurality of air holes in the at least one of the end face plates.

2. The power supply device according to claim 1, further comprising:
a first hit wall located in the redirection area to redirect the jet substance, the first hit wall being at a hitting position of the jet substance discharged through the guide clearance.

3. The power supply device according to claim 2, further comprising:
a second hit wall at a hitting position of the jet substance redirected by the first hit wall, the second hit wall having, between the second hit wall and the inner surface of the case body, a passage clearance through which the jet substance discharged through the guide clearance passes,
wherein the power supply device allows the jet substance passing through the passage clearance to hit the first hit wall and the second hit wall to flow into the blowing duct area.

4. The power supply device according to claim 3, wherein
the first hit wall and the second hit wall are heat-resistant plates.

5. The power supply device according to claim 2, wherein
the first hit wall is fixed to the case body.

6. The power supply device according to claim 3, wherein
the battery block includes a battery holder holding the plurality of battery cells in position, and
the second hit wall is integral with the battery block.

7. The power supply device according to claim 2, wherein
at least one of the plurality of battery cells has a surface partially exposed to the cooling surface of the battery block.

8. The power supply device according to claim 2, wherein
the first hit wall has a vertical width (H1) 1.5 to 5 times inclusive an inner dimension (d) of the guide clearance.

9. The power supply device according to claim 3, wherein
the second hit wall has a vertical width (H2) greater than a vertical width (H1) of the first hit wall.

10. The power supply device according to claim 2, wherein
the first hit wall includes a bent portion protruding toward the battery block.

11. The power supply device according to any one of claims 1 to 10, further comprising:
a blower fan on the at least one of the end face plates having the expansion chamber inside.

12. The power supply device according to claim 11, wherein
the power supply device allows the cooling air blown by the blower fan to flow into the guide clearance.
